# EUROPEAN PATENT SPECIFICATION

(11) **EP 4 242 038 B1**
(45) Date of publication and mention of the grant of the patent: **03.09.2025**
(21) Application number: 22161664.2
(22) Date of filing: 11.03.2022
(51) Int. Cl.: B60L 7/22, B60L 58/33, B60L 58/30, B60L 1/00, B60L 50/71, H01M 8/04223, H01M 8/04298, H01M 8/04537, H01M 8/04746, H01M 8/04955, H01M 8/04082, B60K 1/02, H01M 8/04089, B60L 50/75, B60L 58/40, B60K 1/04

(54) **A SYSTEM, A METHOD OF CONTROLLING A SYSTEM, AND A VEHICLE COMPRISING A SYSTEM**
SYSTEM, VERFAHREN ZUR STEUERUNG EINES SYSTEMS UND FAHRZEUG MIT EINEM SYSTEM
SYSTÈME, PROCÉDÉ DE COMMANDE D'UN SYSTÈME ET VÉHICULE COMPORTANT UN SYSTÈME

(43) Date of publication of application: 13.09.2023
(73) Proprietor: VOLVO TRUCK CORPORATION, 405 08 Göteborg (SE)
(72) Inventor: AUDHAV, Tove, 438 34 Landvetter (SE); RAHM, Fredrik, 242 96 Hörby (SE)
(74) Representative: Kransell & Wennborg KB

(56) References cited:
- WO-A1-2007/064317
- DE-A1- 102007 054 246
- DE-A1- 102010 008 917
- DE-A1- 102017 004 448
- US-A1- 2006 046 895
- US-A1- 2018 126 868
- US-A1- 2021 159 520

## Description

### TECHNICAL FIELD

The present disclosure relates to an energy management system for a vehicle, the energy management system having a fuel cell system and a brake resistor. The present disclosure also relates to a method of controlling a system, and a vehicle comprising such a system. Although the disclosure will mainly be directed to a vehicle in the form of a truck using any one of a battery system and a fuel cell system for generating electric power to an electric traction machine, the disclosure may also be applicable for other types of vehicles using a fuel cell system for generating electric power, such as e.g. a hybrid vehicle comprising an electric machine as well as an internal combustion engine for propulsion.

### BACKGROUND

The propulsion systems of vehicles are continuously developed to meet the demands from the market. A particular technical area of vehicle propulsions systems relates to the emission of environmentally harmful exhaust gases. Therefore, other more environmentally friendly alternatives compared to conventional internal combustion engines are evaluated and implemented in vehicles. One example of such alternatives is the use of one or more electric machines for propelling the vehicle, where electric power to the one or more electric machines is generated by at least one fuel cell system.

One of the more important features of electric vehicles relates to their capability to capture kinetic energy from braking and convert it electrically to be stored into the battery system and used for providing propulsive power or for the basic energy needs of supplementary electrical systems.

In comparison to a vehicle propelled solely by an internal combustion engine (ICE), a vehicle powered by a fuel cell system and one or more electric machine may occasionally face challenges with obtaining adequate auxiliary braking. For an ICE operated vehicle, the auxiliary braking can be provided by means of a retarder or by so called engine braking. However, for an electric vehicle, the auxiliary braking functionality may sometimes be a dimensioning factor for the components making up the powertrain system of the vehicle, in particular for the cooling system of the powertrain system. This is at least partly due to the cooling capacity of the cooling system. By way of example, a heavy-duty electric vehicle may often be subject to braking/retardation for long periods, while driving downhill along a route. In electric vehicles, this braking/retardation may generally be carried out by braking using an electric machine which generates power and subsequently charges the batteries of the vehicle. If the braking/retardation periods are long-lasting and extensive, the batteries will eventually become fully charged and cannot no longer provide the required brake power. In such cases, the brake system may activate or operate a brake resistor which is configured to handle the excessive generated heat once the batteries are fully charged. The resistor is heated up using the power produced from the electric machines. For thermal management reasons, the brake resistors need to be cooled during operation of the vehicle.

As a consequence, any auxiliary braking of the vehicle may generally cause the cooling system of the vehicle to handle high levels of excessive energy.

According to their Abstracts, WO 2007/064317 A1, DE 102010008917 A1 and US 2021159520 A1 disclose various examples of fuel cell systems. DE 10 2007 054246 A1 discloses energy management system for an electric vehicle, comprising a fuel cell system, an air compressor arrangement and an air-cooled brake resistor in fluid communication with the air compressor arrangement.

It would be desirable to provide an improved energy management system for managing any excessive energy generated during operation of an electric vehicle comprising at least a fuel cell system for powering one or more electric machines.

### SUMMARY

It is thus an object of the present disclosure to at least partially overcome the above-described deficiencies. This object is achieved by a system according to claim 1. The objective is also achieved by the other independent claims. The dependent claims are directed to advantageous embodiments of the disclosure.

According to a first aspect, there is provided an energy management system for a vehicle. The energy management system comprises a fuel cell system having at least one fuel cell with an anode side and a cathode side, an air inlet conduit connected to an inlet end of the cathode side for supplying air to the cathode side of the at least one fuel cell. The fuel cell system further comprises an air compressor arrangement disposed in the air inlet conduit and in fluid communication with the cathode side. The energy management system further comprises an air-cooled brake resistor in fluid communication with the air compressor arrangement. Moreover, the energy management system comprises a control system in communication with the air compressor arrangement and further in communication with a controllable valve assembly. The controllable valve assembly is arranged and configured to control supply of compressed air from the air compressor arrangement to any one of the at least one fuel cell and the air-cooled brake resistor via a first fluid conduit and a second fluid conduit, respectively. Further, the control system is configured to control distribution of compressed air to any one of the air-cooled brake resistor and the at least one fuel cell by operating the air compressor arrangement and controlling the controllable valve assembly responsive to a need for dissipating energy.

The proposed energy management system provides a dynamic, yet efficient and versatile way of managing excessive energy generated during operation of the vehicle, e.g. due to a braking demand for the vehicle, during a stand-still operation of the vehicle with the fuel cells active and/or during any other operations of the vehicle where the fuel cells produce more electrical energy than can be used by, or stored in, one or more components of the electric systems of the vehicle.

In particular, the provision of the controllable valve assembly being arranged and configured to control supply of compressed air from the air compressor arrangement to any one of the at least one fuel cell and the air-cooled brake resistor, contributes to a dynamic control of distributing compressed air from the air-compressor arrangement to the brake resistor for handling excessive electrical energy, while also ensuring an adequate operation of the fuel cell(s) by supplying compressed air to the fuel cell(s) on the basis of predicted and/or current load on the fuel cell system.

As such, the proposed energy management system provides for safeguarding that a supply of compressed air can be provided in a controlled manner in view of the operation of the fuel cell system.

Typically, the control system may be configured to control distribution of compressed air to any one of the air-cooled brake resistor and the at least one fuel cell by operating the air compressor arrangement and controlling the controllable valve assembly in response to a control signal containing data indicative of a need for dissipating energy. The need for dissipating energy can be determined in several different manners, as described herein.

The proposed energy management system is particularly useful when there is a need for transferring excessive energy from a vehicle braking event. In this context, it has been realised that FCEVs generally need additional devices (such as retarders) or sufficiently dimensioned batteries to absorb braking energy generated while driving downhill. Retarders may often result in wastage of energy whereas bigger batteries may result in higher vehicle weight and oversizing of the energy storage system to meet just one requirement.

In particular, by providing an energy management system having an air compressor arrangement disposed in the air inlet conduit of the fuel cell system and in fluid communication with the fuel cell(s) and the brake resistor, it becomes possible to improve the capabilities of the vehicle to absorb some amount of energy (kinetic energy is converted to electrical energy) and power during the breaking demand, such as during a braking event or in the preparations of an upcoming braking event. Such excessive energy may thus be used to pressurize the air by the air-compressor arrangement, i.e. the electrical energy is used to power the air-compressor arrangement), whilst the control system is capable of controlling the distribution of the compressed air to the fuel cell(s) and the brake resistor, thereby increasing the general efficiency of the energy management system of the vehicle.

In other words, the braking demand generally refers to an energy dissipation situation where there is a need for managing excessive energy generated due a predicted or prevailing braking operation. Hence, the term "braking demand" may refer to any one of a current braking demand and a predicted braking demand.

The control system is configured to control distribution of compressed air to any one of the air-cooled brake resistor and the at least one fuel cell by operating the air compressor arrangement and controlling the controllable valve assembly in response to a control signal containing data indicative of a need for dissipating energy due to a braking demand of the vehicle.

The proposed energy management system may also allow for recuperating energy more effectively without oversizing the battery/energy storage system of the vehicle. Excessive energy may typically be generated by operating an electric traction machine of the vehicle in a generator mode for generating electrical energy during the regenerative braking event of the vehicle. A conventional electric machine may be operable both in a traction mode and in a generator mode.

Hence, according to at least one embodiment, the air compressor arrangement is arranged to operate from recuperation of brake energy from the braking event. As such, the air compressor arrangement is arranged to absorb energy generated from the braking event.

In addition, or alternatively, the control system is configured to control distribution of compressed air to any one of the air-cooled brake resistor and the at least one fuel cell by operating the air compressor arrangement and controlling the controllable valve assembly responsive to a need for dissipating energy when at least one electric traction machine operates in a generator mode and there is a determined surplus of electrical energy.

In addition, or alternatively, the control system is configured to control distribution of compressed air to any one of the air-cooled brake resistor and the at least one fuel cell by operating the air compressor arrangement and controlling the controllable valve assembly responsive to a need for dissipating energy when at least one electric traction machine operates in a traction mode and there is a determined surplus of electrical energy.

In addition, or alternatively, the control system is configured to control distribution of compressed air to any one of the air-cooled brake resistor and the at least one fuel cell by operating the air compressor arrangement and controlling the controllable valve assembly responsive to a need for dissipating energy when at least one electric traction machine is in a non-operative mode and the vehicle is at stand-still. In addition, or alternatively, the control system is configured to control distribution of compressed air to any one of the air-cooled brake resistor and the at least one fuel cell by operating the air compressor arrangement and controlling the controllable valve assembly responsive to a need for dissipating energy when at least one electric traction machine is in a non-operative mode, the vehicle is at stand-still, and with the fuel cell(s) operating in an active state for producing electrical energy. In this context, the term "non-operative mode" of the electric traction mode means a mode of the electric traction machine where there is no ongoing conversion of energy. The other modes of the electric traction machine are generally a traction mode (motoring) and a generator mode (breaking). In this context, the term "stand-still of the vehicle" refers to an operating situation of the vehicle where there is no traction power (from any energy source) provided to the wheels of the vehicle.

The air compressor arrangement may be provided in several different configurations. Typically, the air compressor arrangement may be an electrically operated compressor. By way of example, the air compressor arrangement is drivingly connected to an electric motor. The air compressor arrangement is thus powered by the electric motor. The electric motor is operable from any source of electrical energy, including recuperated energy from braking, i.e. produced power from the regenerative braking, electrical energy from a battery system and electrical energy from one or more fuel cells. In addition, or alternatively, the air-compressor arrangement may be configured to operate in any type of driving situation, even when the vehicle is not braking. The air compressor arrangement of the fuel cell system is arranged to be operated to increase the pressure level of the intake air to levels suitable for the fuel cell. The air-compressor arrangement may also be operated to increase the temperature level of the intake air.

The control system may be configured to control distribution of compressed air to any one of the air-cooled brake resistor and the at least one fuel cell by controlling the controllable valve assembly in response to a control signal further containing data indicative of a fuel cell system load. The data may refer to any one of a current fuel cell system load and a predicted fuel cell system load.

The need for energy dissipation may be determined by calculating excessive electrical energy, which can e.g. be derivable by determining the sum between predicted electrical energy consumption and predicted energy production over a given period of time. The need for dissipating energy due to the braking demand of the vehicle can be determined or estimated in several different manners. By way of example, the control system may be configured to determine the need for dissipating excessive energy due to the braking demand of the vehicle by determining an amount of possible excessive energy from a regenerative braking event of the vehicle. Typically, although strictly not required, the provision of determining an amount of possible excessive energy from the braking event of the vehicle is determined during a regenerative braking event. However, it may also be possible to predict possible excessive energy from an up-coming braking event of the vehicle in beforehand based on one or more operational parameters, as mentioned herein. In this manner, the control system allows for estimating the need for dissipating energy in view of how much energy that can or will be regenerated.

By way of example, the amount of possible excessive energy may further be determined by estimating the total electric energy storage level of the vehicle. The total energy level of the vehicle may comprise different sets of data depending on type of vehicle. By way of example, the total energy level includes data indicating state-of-charge SOC of the energy storage system, including SOC of any battery systems and SOC of the fuel cell system of the vehicle. In addition, or alternatively, the total energy level may include current energy need for powering auxiliaries of the vehicle and predicted future energy need of the vehicle for a given time period. Such data can be gathered by various sensors and the control system, as is commonly known in the art. To this end, the total energy level of the vehicle may correspond to the prevailing SOC of the energy storage system, while including predictive energy demands for the vehicle for a given time period.

According to at least one example embodiment, the amount of possible excessive energy from the braking event of the vehicle is determined based on an operational parameter of the vehicle. By way of example, the operational parameter contains any one of the following data: data relating to an upcoming vehicle path, such as a downhill and uphill path; data relating to a change in vehicle speed, data relating to a change in acceleration, data relating to state-of-charge, SOC, of the ESS, data relating to power limits of the ESS, data relating to state of life of the fuel cell(s), characteristics of the electric machine, data relating to the weight of the vehicle, data indicating type of vehicle.

The control system may be configured to control the controllable valve assembly to direct compressed air to the air-cooled brake resistor in response to the need for dissipating energy and further configured to control the controllable valve assembly to vary the level of the distribution of compressed air to the at least one fuel cell in response to a change in the fuel cell system load. In this manner, the control system provides for controlling the compressed air to the brake resistor, while fine adjusting the level of compressed air to the fuel cell(s) when there is a change in the fuel cell load. Herby, a more precise control of the system is provided.

The control system may be configured to prioritize distributing compressed air to the at least one fuel cell on the basis of the data indicating the fuel cell system load. The controllable valve assembly may be controlled to distribute a substantial amount of produced compressed air to the at least one fuel cell if the fuel cell system load is above a threshold value and distribute any remaining produced compressed air to the air-cooled brake resistor.

The control system may be configured to determine a maximum operational state of the air compressor arrangement and control the controllable valve assembly to limit the distribution of the compressed air to the air-cooled brake resistor if the air compressor arrangement reaches its maximum operational state.

The control system may be configured to control distribution of compressed air to the air-cooled brake resistor and the at least one fuel cell by controlling the controllable valve assembly to distribute compressed air to the at least fuel cell when the control signal indicates a braking demand and a low fuel cell system load. In this situation, the air compressor arrangement is operated for distributing compressed air to the brake resistor on the basis of the determined braking need and for distributing compressed air to the fuel cells on the basis of the determined fuel cell system load.

During a change in the fuel cell system load, the opening degree of the controllable valve assembly may generally be controlled to change a reduced state. Hence, the control system is also configured to control distribution of compressed air to the air-cooled brake resistor and the at least one fuel cell by controlling the controllable valve assembly to distribute compressed air to the at least fuel cell when the control signal indicates a braking demand and an intermediate fuel cell system load. In this situation, the air compressor arrangement is operated for distributing compressed air to the brake resistor on the basis of the determined braking need and for distributing compressed air to the fuel cells on the basis of the determined fuel cell system load. It should be noted that the air flow to the brake resistor may only need to be reduced if the operational status of the air-compressor arrangement is limited. The optimal case here would still be to provide all the desired compressed air to both the fuel cells and to the brake resistor. However, if the air-compressor arrangement hits its operational limit, the control system may select to prioritize supplying compressed air to the fuel cells, while merely supplying residual compressed air to the brake resistor.

In addition, or alternatively, the control system may be configured to control distribution of compressed air to the air-cooled brake resistor and the at least one fuel cell by controlling the controllable valve assembly only to distribute compressed air to the at least fuel cell when the control signal indicates a non-braking demand and a predicted or present fuel cell system load. In this situation, the air compressor arrangement is operated for distributing compressed air only to the fuel cells and on the basis of the determined fuel cell system load.

In addition, or alternatively, the control system may be configured to control distribution of compressed air to the air-cooled brake resistor and the at least one fuel cell by controlling the controllable valve assembly only to distribute compressed air to the brake resistor when the control signal indicates a braking demand and no load on the fuel cell system. In this situation, the air compressor arrangement is operated for distributing compressed air only to the brake resistor and on the basis of the determined braking demand.

The various states and loads of the fuel cell system, i.e. the high load, intermediate load, low load and no load, may generally be determined by using thresholds levels. Such thresholds level can be predetermined thresholds or dynamically defined thresholds. By way of example, such thresholds levels can be derivable from a look-up table stored in a memory of the controller. Other options are also conceivable depending on type of vehicle, system and controller.

The control system may be configured to deactivate the air compressor arrangement in response to a non-braking demand and no fuel cell system load. That is, the control system may be configured to deactivate the air compressor arrangement if the control signal indicate a non-braking demand and no fuel cell system load.

In addition, or alternatively, the control system may be configured to control distribution of compressed air to any one of the air-cooled brake resistor and the at least one fuel cell by operating the air compressor arrangement and controlling the controllable valve assembly responsive to the need for dissipating energy and when the vehicle is at stand-still.

The controllable valve assembly may comprise a set of individual flow control valves, each one of the individual flow control valves being configured to regulate any one of a flow rate and pressure of the compressed air being supplied from the air compressor arrangement.

By way of example, one of the individual flow control valves is disposed in the first fluid conduit and arranged to regulate the flow rate or pressure of the compressed air to the at least one fuel cell. By way of example, one of the individual flow control valves is disposed in the second fluid conduit and arranged to regulate the flow rate or pressure of compressed air to the air-cooled brake resistor. According to at least one example embodiment, the controllable valve assembly is a three-way flow control valve device. The three-way flow control valve device comprises an inlet port fluidly connected to the air compressor arrangement, a first outlet port fluidly connected to the first conduit and a second outlet port fluidly connected to the second conduit.

According to at least one example the fuel cell system comprises an air filter arranged to receive air from an ambient environment, the air filter being arranged at an inlet of the air inlet conduit and upstream the air compressor arrangement.

The control system may comprise a controller configured to be in communication with the air compressor arrangement and further in communication with a controllable valve assembly. The controller may comprise a processing circuitry. In addition, the controller may comprise a memory for receiving and storing data.

In regard to the control of the controllable valve assembly, it should be readily appreciated that the actual flow of air between the air compressor arrangement, the fuel cell(s) and the brake resistor may further be controlled in cooperation with other operational data of the vehicle. Such data may generally be stored in the controller, such as the electronic control unit, ECU. Hence, the control system may further comprise a controller arranged in communication with the controllable valve assembly so as to control the controllable valve assembly based on the control signal indicative of the operating condition of the vehicle. The controller may include a control circuitry.

The controller of the control system may actuate the controllable valve assembly pneumatically or electrically, as is commonly known in the art. The controllable valve assembly may include a switch actuator. By way of example, the switch actuator may have a solenoid actuator operable to move part of the controllable valve assembly regulate the opening degree of the inlet port and to open and close the inlet port. Typically, the controllable valve assembly comprising the associated switch actuator is controllable in response to the input signal from the controller. Hence, the switch actuator may be configured to operate the controllable valve assembly on the basis of the control instructions from the controller.

According to a second aspect, there is provided a vehicle comprising an energy management system according to any one of the embodiments described above in relation to the first aspect. The vehicle is at least partly propelled by an electric machine, the electric machine being electrically connected to a fuel cell system.

Effects and features of the second aspect are largely analogous to those described above in relation to the first aspect.

According to at least one example embodiment, the vehicle thus comprises the electric traction machine configured to propel the vehicle and to controllably regenerate electric power during regenerative braking of the vehicle. The electric traction machine is in electrical connection with the electrical motor configured to power the air compressor arrangement. The electric motor may comprise an output shaft operatively connected to the air compressor arrangement. The air compressor arrangement is operable by the electric motor by rotation of the output shaft. The vehicle may generally comprise an electric energy storage system in electric connection with the electric motor. The electric energy storage system may also be in electric connection with the electric machine. The electric energy storage system may be a battery system configured to receive and supply electric power, wherein the electric motor is operated by electric power received from the battery system. In addition, or alternatively, the electric motor may be operated by electric power from the fuel cell(s). In addition, or alternatively, the electric traction machine may be operated by electric power from the fuel cell(s).

The battery system may further be electrically connected to the electric traction machine and configured to receive electric power during regenerative braking.

According to an example, the electric energy storage system is a battery which can be charged by electric power during regenerative braking, or to supply electric power to e.g. the electric motor for operation of the air compressor. The electric energy storage system thus has a charging capacity, which corresponds to the available electric power that the electric energy storage system can receive before being filled. The charging capacity may also be based on e.g. the temperature of the electric energy storage system, state of charge (SOC), etc. Accordingly, when the electric energy storage system has reached its maximum allowed state of charge level it cannot receive any further electric power. A similar situation may occur when the electric energy storage system is already charging according to an intermediate SOC. Also in such situations, the ESS may reach its allowed state of charge level, whereby it cannot receive any further electric power.

Typically, the controller may be connected to the electric energy storage system. The controller may comprise a processing circuitry configured to receive a signal indicative of a regenerative braking request for the vehicle, determine a level of electric power generated by the electric traction machine during the regenerative braking of the vehicle and also a level of electric power produced from the fuel cell(s), receive a signal indicative of a current electric charging capacity of the electric energy storage system, compare the level of electric power generated during the regenerative braking with the current electric charging capacity of the electric energy storage system, compare the level of electric power produced from the fuel cell(s) with the current electric charging capacity of the electric energy storage system and control the electric energy storage system to supply electric power to the electric motor during the regenerative braking when the level of electric power generated during the regenerative braking is higher than the current charging capacity of the electric storage system. The electric motor may then be configured and connected to the air compressor arrangement so as to power the air compressor arrangement from excessive electric energy. The electric motor may also power the air compressor arrangement from energy generated due to the braking event, where the electric traction machine operates as a generator.

According to a third aspect, there is provided a method for controlling an energy management system of a vehicle. The energy management system comprises a fuel cell system having at least one fuel cell with an anode side, an air compressor arrangement in fluid communication with the cathode side via a first fluid conduit; an air-cooled brake resistor in fluid communication with the air compressor arrangement via a second fluid conduit; and further a control system having a controller in communication with the air compressor arrangement and with a controllable valve assembly for controlling supply of compressed air from the air compressor arrangement to any one of the at least one fuel cell and the air-cooled brake resistor via the first fluid conduit and the second fluid conduit, respectively,

The method comprises: receiving a control signal containing data indicative of a need for dissipating energy due to a braking demand of the vehicle; and, in response to the received control signal, controlling distribution of compressed air to any one of the air-cooled brake resistor and the at least one fuel cell by controlling the air compressor arrangement and the controllable valve assembly.

Effects and features of the third aspect are largely analogous to those described above in relation to the first aspect.

Further features of, and advantages will become apparent when studying the appended claims and the following description. The skilled person will realize that different features may be combined.

The terminology used herein is for the purpose of describing particular examples only and is not intended to be limiting of the disclosure. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

### BRIEF DESCRIPTION OF THE DRAWINGS

The above, as well as additional objects, features, and advantages, will be better understood through the following illustrative and non-limiting detailed description of exemplary embodiments, wherein:
Fig. 1 is a lateral side view illustrating an example embodiment of a vehicle in the form of a truck;
Fig. 2 is a schematic illustration of an example embodiment of a system comprising a fuel cell system in fluid communication with a brake resistor;
Fig. 3 is a schematic illustration of another example embodiment of a system comprising a fuel cell system in fluid communication with a brake resistor; and
Fig. 4 is a flow chart of a method of controlling the system according to an example embodiment.

### DETAILED DESCRIPTION

The present disclosure will now be described more fully hereinafter with reference to the accompanying drawings, in which exemplary embodiments are shown. The disclosure may, however, be embodied in many different forms and should not be construed as limited to the embodiments set forth herein; rather, these embodiments are provided for thoroughness and completeness. Like reference character refer to like elements throughout the description.

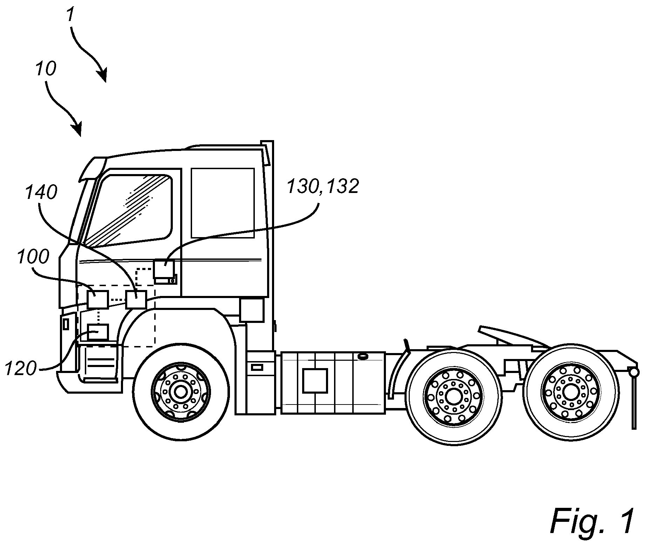

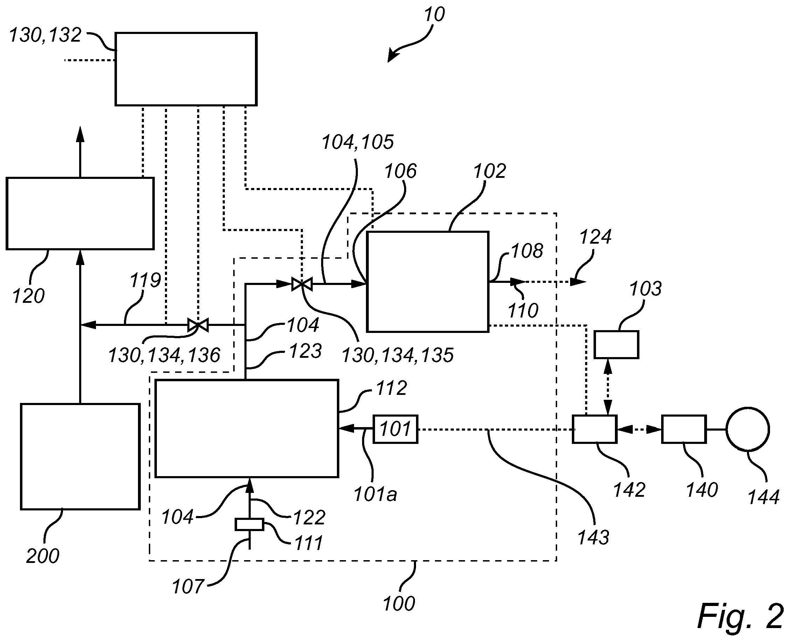

With particular reference to Fig. 1, there is depicted a vehicle 1 in the form of a truck. The vehicle 1 comprises a traction machine 140 for propelling the wheels of the vehicle 1. The traction machine 140 is here provided in the form of an electric machine arranged to receive electric power from a battery system 103 (Fig. 2) or directly from a fuel cell system 100 which is described in further detail below. The fuel cell system 100 comprises one mor more fuel cells and an air compressor arrangement 112 (Fig. 2) for providing pressurized air to the fuel cells. The fuel cell system 100 is here part of an energy management system 10. The energy management system 10 further comprises an air-cooled brake resistor 120 (Fig. 2) in fluid communication with the air compressor arrangement 112, as described herein. The vehicle 1 also comprises a control system 130 having a controller 132 for controlling various operations and functionalities as will also be described in further detail below.

In order to describe the energy management system 10 in more detail, reference is made to Fig. 2 which is a schematic illustration of the energy management system according to an example embodiment. In Fig. 2, a dashed line between electric components, such as battery system, electric machine, fuel cells and electric motors, generally denotes an electrical connection while a dashed line between the control system 130 and any component of the system generally denotes a communication data connection. A solid line generally denotes a fluid medium connection.

As illustrated in Fig. 2, the energy management system 10 comprises the fuel cell system 100, the air-cooled brake resistor 120 and the air compressor arrangement 112.The air compressor arrangement 112 is generally an integral part of the fuel cell system 100 and arranged in fluid communication with the air-cooled brake resistor 120.

The fuel cell system 100 comprises one or more fuel cells 102, also commonly referred to as a fuel cell stack. While the fuel cell system may only be composed of one fuel cell, it may generally be composed of more than one fuel cell, such as two fuel cells or a plurality of fuel cells. The fuel cells may form a so-called fuel cell stack. The fuel cells may likewise be arranged in multiple fuel cell stacks, each fuel cell stack comprising multiple fuel cells arranged in a stack configuration. Thus, the term at least one fuel cell encompasses a single fuel cell, multiple fuel cells, a fuel cell stack containing one or more fuel cells as well as an arrangement of multiple fuel cell stacks, each fuel cell stack containing one or more fuel cells. In the vehicle in Fig. 1, the system comprises fuel cells 102 arranged into two fuel cell stacks. Each one of the fuel cells 102 making up the fuel cell stack generally comprises an anode side receiving hydrogen as a fuel component and a cathode side receiving compressed air as another fuel component. Other types of fuel components are also conceivable for fuel cells. While there are several different types of fuel cells, distinguished mainly by the type of electrolyte used, a so-called Proton Exchange Membrane (PEM) fuel cell is particularly suitable for use in heavy-duty vehicles, such as the vehicle 1 in Fig. 1. Hence, the fuel cell 102 is here a PEM fuel cell stack.

Turning to Fig. 2, the fuel cell 102 is schematically illustrated and only depicts the cathode side. The anode side is partly omitted for simplifying the illustration. Other components such as balance of plant components could also be included in the fuel cell system as are commonly used in the field of fuel cell system.

The fuel cell system 100 further comprises an air inlet conduit 104 connected to an inlet end 106 of the cathode side of the fuel cell 102. The inlet conduit 104 is arranged to supply air to the cathode side. The inlet conduit 104 has an inlet 107 in fluid communication with ambient environment, as illustrated in Fig. 2. The fuel cell system 100 also comprises an outlet conduit 108 connected to an outlet end 110 of the fuel cell 102 cathode side. Hereby, exhaust flow is supplied from the outlet end 110 of the fuel cell 102 and into the outlet conduit 108.

As mentioned above, the fuel cell system 100 also comprises the air compressor arrangement 112, sometimes also denoted as the air compressor, or simply the compressor. The air compressor 112 is disposed in the inlet conduit 104, as depicted in Fig. 2. In particular, the air compressor arrangement 112 is arranged upstream the fuel cell 102 in the inlet conduit 104. The air compressor arrangement 112 is arranged in fluid communication with the cathode side, as illustrated in Fig. 2.

The air compressor arrangement 112 is an electrical compressor. In other words, the air compressor arrangement 112 is an electrically-driven compressor. The fuel cell system here comprises an electric motor 101. The electric motor 101 is arranged to operate the air compressor arrangement 112. The electric motor 101 can be an integral part of the air compressor arrangement 112 or a separate component in electrical connection with the air compressor arrangement 112, as illustrated in Fig. 2. As further described herein, the air compressor arrangement 112 is drivingly connected to the electric motor 101, and further operable from any source of electrical energy.

Although not explicitly illustrated, the fuel cell system 100 may also comprise an expander. The expander may be a turbine. By way of example, the air compressor 112, the expander and the electric motor 101 are coupled to each other by means of a compressor shaft. The purpose of the expander is to support the electric motor 101, such that part of the electrical energy/power required by the compressor 112 is provided by the expander and rest is delivered from the electric motor 101.

In Fig. 2, the air compressor arrangement 112 is powered by the electric motor 101 which receives electric power from one or more electrical energy sources, such as the battery system 103, the electric traction machine 140 and the fuel cells 102. As such, the air compressor 112 is in electrical connection with the battery system 103, the electric traction machine 140 and the fuel cells 102. In Fig. 2, the air compressor 112 is in electrical connection with the battery system 103, the electric traction machine 140 and the fuel cells 102 via a junction unit 142.

The air compressor 112 is arranged to receive ambient air 122, and pressurize ambient air to compressed air 123. The ambient air is supplied to the air compressor 112 via an air filter 111, as illustrated in Fig. 2. The pressurized ambient air (compressed air 123) is subsequently supplied through the inlet conduit 104 and provided to the inlet end 106 of the fuel cell 102. As illustrated in Fig. 2, the air filter 111 is arranged upstream the air compressor 112. In addition, the air filter 111 is arranged at the inlet 107 of the air inlet conduit 104. The fuel cell system 100 thus comprises the air filter 111 arranged to receive air from the ambient environment. The air compressor, air filter and expander are commonly known components in the fuel cell system and thus not further described herein.

By means of the example embodiment depicted in Fig. 2, ambient air 122 is received by the air compressor 112, via the filter 111. The air compressor 112 pressurizes the air and supplies the pressurized air towards the inlet end 106 of the fuel cell 102, where electric power is generated. The fuel cell 102 exhausts cathode exhaust through the outlet end 110 and into the outlet conduit 108. The exhaust flow may optionally be further directed into the expander, which expands the air and supplies the expanded air to an exhaust conduit 124.

The fuel cell system 100 may also comprise additional conventional system components, such as a humidifier configured to manage and transfer humidity in the cathode side, a charge air cooler, such as a charge air intercooler, arranged in the inlet conduit 104 etc. While these types of components may be provided in several different ways, such components are not considered relevant for the functions described herein, and thus not further described.

Turning again to Fig. 2, the air inlet conduit 104 is here split into a first fluid conduit 105 and a second fluid conduit 119. Each one of the first fluid conduit 105 and the second fluid conduit 119 is configured to transfer compressed air 123.

In particular, the first fluid conduit 105 is configured to transfer compressed air to the fuel cell 102, whilst the second fluid conduit is configured to transfer compressed air to the air-cooled brake resistor 120.

Thus, the air compressor arrangement 112 is disposed in the air inlet conduit 104 and in fluid communication with the cathode side via the first fluid conduit 105. Analogously, the air-cooled brake resistor 120 is disposed in the second fluid conduit 119. The air-cooled brake resistor is thus arranged in fluid communication with the air compressor arrangement 112 via the second fluid conduit 119. The second fluid conduit 119 is here an integral part of the air inlet conduit 104. However, the second fluid conduit 119 may likewise be a separate conduit connected to the air inlet conduit 104.

In Fig. 2, the air-cooled brake resistor is arranged to be cooled by the compressed air 123 from the air compressor arrangement 112. In other words, the air-cooled brake resistor 120 is here an air-cooled electric brake resistor. The electric brake resistor 120 is arranged in an air conduit in the form of the second conduit 119 in downstream fluid communication with the air compressor 112. The electric brake resistor 120 is also electrically connected to, and operable by, an electric energy storage system, such as a battery system 103, the fuel cells 102. Accordingly, although not illustrated, the brake resistor is electrically connected to any one of the battery system 103 and the fuel cells 102. Thus, the electric brake resistor 120 is arranged as an electric power consumer. When the electric brake resistor 120 receives electric power from the battery system, the pressurized air from the air compressor is heated by the brake resistor. The pressurized and heated air is thereafter directed towards the ambient environment. The air from the electric brake resistor 120 is preferably directed into a muffler (not shown) of a braking device. The muffler is configured to reduce noise and can also provide a pressure drop of the air. The electric brake resistor 120 is configured to be cooled by the compressed air 123 from the air compressor arrangement 112 in order to avoid excess heating. Hence, the brake resistor 120 is connected to an air-cooling system. Thus, the electric brake resistor is an air-cooled electric brake resistor 120.

During operation of the vehicle 1, i.e. when the electric traction machine 140 operates as a generator to control the vehicle speed, i.e. the vehicle 1 operates in the regenerative braking mode, electric power is transmitted from the electric traction machine 140 to a battery system 103. If the battery system 103 is not able to receive all, or parts of the electric power generated by the electric traction machine 140, for example because of a current electric charging capacity, i.e. the level of electric power the battery is able to receive until being fully charged or has reached its maximum allowed state of charge level, the excess electric power should preferably be dissipated. In the present case, the battery system 103 is controlled, e.g. by the control system 130, to supply electric power to the electric motor 101 of the system. In addition, or alternatively, the electric traction machine 140 operating in its generator mode to generate electrical energy may directly supply electrical energy to the electric motor 101 that is operating to power, and thus move, the compressor 112 so as to compress air 122. In other words, the compressor 112 is provided with the corresponding electric motor 112 (that may also be an integral part of compressor) which is connected to the junction unit 142 to receive power from the battery system 103, the electric traction machine 140, and/or the fuel cells 102. The electric motor 101 is hereby, by the received electric power from the battery system 103, fuel cells 102, and/or electric traction machine 140, powering the air compressor 112.

By way of example, the electric motor 101 is, by the received electric power, rotating an output shaft 101a to operate the air compressor arrangement 112. The air compressor arrangement 112 in turn pressurizes air 122 and supplies the pressurized air 123 further through the air conduit 104 to the fuel cell 102 via the first conduit 105 and to the air-cooled brake resistor 120 via the second conduit 119. As such, the air compressor arrangement 112 is generally configured to pressurize ambient air to a certain level to generate a steady stream of airflow, which may be used for the proper function of the fuel cell(s) 102 and for supplying compressed air cooling the brake resistor 120. The air 122 may either be filtered air or non-filtered air.

While the air compressor arrangement 112 may generally be operable by the electric motor 101, the air compressor arrangement may likewise be operable by another electric motor (not shown) that is comprised in the vehicle. The connection between the electrically operable air compressor arrangement 112 and the electric motor 101 is mechanical, i.e. an output shaft of the electric motor is coupled to the compressor. The electric motor 101 is here powered from any one of the battery system 103, the fuel cells of the fuel cell system and energy generated during a regenerative braking operation. Other options may also be contemplated depending on type of vehicle.

In Fig. 2, there is illustrated one example of electrically connecting the electric motor to the electrical energy sources by the junction unit 142. As illustrated, the vehicle 1 comprises the traction machine 140 for propelling one or more set of wheels 144 of the vehicle 1. The fuel cell system 100 and the battery system 103 are selectively connectable to the electric traction machine 140, e.g. by the junction unit 142. The junction unit 142 is a housing that serves as the communal meeting spot for the electrical wires and will redirect the current/power to the different components. In other words, the junction unit 142 is here configured to connect the fuel cells 102 to the battery system 103 and the electric traction machine 140. Traction power to the wheels 144 is delivered by any one of the battery system 103, electric traction machine and the fuel cells 102. The fuel cells are electrical connected to the junction via an electrical output connection. The battery system 103 is connected to the junction unit 142 by a corresponding electrical connection. By way of example, the battery system 103 is connected via the junction unit 142 to the electric traction machine 140 that provides traction power to the vehicle, while the fuel cells 102 supply electrical energy to the electric traction machine 140 and/or delivers power to the battery system 103 via the junction unit 142, as is commonly known in the field of FCEVs. In other words, a typical FCEV may also use traction batteries or capacitors, inverters, and electric motors for providing traction power to the vehicle.

Moreover, the air compressor arrangement 112, which here is an electrical compressor, is powered by the electric motor 101. The electric motor is arranged and configured to receive electric power from one or more of the electrical energy sources, such as the battery system and the electric traction machine, but also the fuel cells. As such, the air compressor is in electrical connection with the battery system, the electric traction machine and the fuel cells via the junction unit 142, as depicted in Fig. 2. In particular, the air compressor 112 is in electrical connection with the junction unit via an electrical connection 143, as depicted in Fig. 2. Thus, the electric motor for the compressor is in electrical connection with the junction unit via the electrical connection 143, as depicted in Fig. 2. The electric motor 101 is arranged in between the air compressor 112 and the junction unit 142. The electric motor 101 is thus in electrical connection with the air compressor 112 and the junction unit 142.

The following will now describe various example embodiments of how to control the flow of compressed air from the air compressor to the fuel cell(s) 102 and the air-cooled brake resistor 120 of the above-described system 10. As mentioned above, the energy management system 10 further comprises the control system 130. The control system 130 of the energy management system 10 will now be further described in relation to Fig. 2.

The control system 130 comprising the controller 132 is in communication with the air compressor arrangement 112. In addition, as illustrated in Fig. 2, the control system 130 comprises a controllable valve assembly 134. Thus, the controller 132 is also in communication with the controllable valve assembly 134. The controllable valve assembly 134 is arranged and configured to control supply of compressed air from the air compressor arrangement 112 to any one of the fuel cell(s) 102 and the air-cooled brake resistor 120. In Fig. 2, the controllable valve assembly 134 is arranged and configured to control supply of a portion of compressed air 123 from the air compressor arrangement 112 to the fuel cell(s) 102 via the first fluid conduit 105. Analogously, the controllable valve assembly 134 is arranged and configured to control supply of a portion of compressed air 123 from the air compressor arrangement 112 to the air-cooled brake resistor via the second fluid conduit 119.

The controllable valve assembly 134 can be provided in several different manners. In Fig. 2, the controllable valve assembly 134 comprises a set of individual flow control valves 135, 136. Each one of the individual flow control valves 135, 134 is configured to regulate any one of a flow and pressure of a fluid medium, such as the compressed air 123 supplied from the air compressor arrangement 112.

As illustrated in Fig. 2, the flow control valve 135 is disposed in the first fluid conduit 105. The flow control valve 135 is here a conventional flow control valve, e.g. a controllable pressure valve. The flow control valve 135 is configured and arranged to regulate the flow or pressure of compressed air 123 to the fuel cell(s) 102.

In similar vein, the flow control valve 136 is disposed in the second fluid conduit 119. The flow control valve 136 is here a conventional shut-off valve. The flow control valve 136 is at least configured and arranged to regulate the flow or pressure of compressed air 123 to the air-cooled brake resistor 120. In some examples, it may be sufficient that the shut-off valve is configured to open and close the passage so as to permit or restrict a supply from the air compressor arrangement 112 to the brake resistor 120.

In Fig. 2, the control system 130 is configured to control distribution of compressed air 123 from the air compressor arrangement 112 to any one of the air-cooled brake resistor 120 and the fuel cell(s) 102 by operating the corresponding flow control valve 136 and flow control valve 135 of the controllable valve assembly 134. In particular, the control system 130 is configured to operate the air compressor arrangement 112 responsive to a need for dissipating electrical energy from the vehicle. In addition, the control system 130 is configured to control the corresponding flow control valve 136 and flow control valve 135 of the controllable valve assembly 134 responsive to the need for dissipating electrical energy. A number of examples of when there may be a need for dissipating energy from the vehicle will hereinafter be described.

The control system 130 is configured to operate the air compressor arrangement 112 responsive to a need for dissipating electrical energy from the vehicle in response to a control signal containing data indicative of a need for dissipating electrical energy due to a braking demand of the vehicle 1. In addition, in this example, the control system 130 is configured to control the corresponding flow control valve 136 and flow control valve 135 of the controllable valve assembly 134 in response to the control signal containing data indicative of the need for dissipating electrical energy due to a braking demand of the vehicle 1. In this manner, the control system 130 is used as a braking energy management system.

As described herein, the braking demand amounts to an energy dissipation situation where there is a need for managing excessive energy generated. Such excessive energy may occasionally be generated due to a predicted or prevailing braking operation.

The control signal is generally received at the controller 132 of the control system 130. Hence, the controller 132 is configured to receive one or more control signals containing data indicative of at least a braking demand of the vehicle, which in Fig. 2 is indicated by a control signal containing data of a wanted brake power. In response to the received one or more control signals, the controller 132 is configured to operate the air-compressor arrangement 112 and the controllable valve assembly 134, as described further herein. The other components of the system 10 may also be at least partly operated on the basis of the one or more control signals, as described herein.

The control system 130 is here also configured to control distribution of compressed air 123 to any one of the air-cooled brake resistor 120 and the fuel cell(s) by controlling the corresponding flow control valve 136 and flow control valve 135 of the controllable valve assembly 134 in response to one or more control signals further containing data indicative of a fuel cell system load. The data indicating the fuel cell system load is generally a measure of the current fuel cell system load. In other situations, the data indicating the fuel cell system load is a measure of a predicted fuel cell system load.

In addition, or alternatively, the control system 130 is configured to control distribution of compressed air 123 to any one of the air-cooled brake resistor 120 and the fuel cell(s) by operating the air compressor arrangement 112 and controlling the controllable valve assembly 134 in response to a determined need for dissipating energy when the electric traction machine 140 operates in a traction mode and there is a determined surplus of electrical energy. Such situation may e.g. occur when there is a desire not to shut-off the fuel cell(s) or a desire not to reduce the power output from the fuel cell(s) due to a predicted power demand on the fuel cell(s) for operating the vehicle. In the latter situation, such reduction of the power output from the fuel cell(s) may have a negative impact on the fuel cell(s).

In addition, or alternatively, the control system 130 is configured to control distribution of compressed air 123 to any one of the air-cooled brake resistor 120 and the fuel cell(s) by operating the air compressor arrangement 112 and controlling the controllable valve assembly 134 in response to a determined need for dissipating energy when the electric traction machine 140 is in a non-operative mode and the vehicle is at stand-still. Such situation may e.g. occur when the vehicle is controlled into the stand-still operation while the SOC of the battery system is high. In this context, the term "non-operative mode" of the electric traction mode means a mode of the electric traction machine where there is no ongoing conversion of energy. In this context, the term "stand-still of the vehicle" refers to an operating situation of the vehicle where there is no traction power (from any energy source) provided to the wheels of the vehicle.

In addition, or alternatively, the control system 130 is configured to control distribution of compressed air 123 to any one of the air-cooled brake resistor 120 and the fuel cell(s) by operating the air compressor arrangement 112 and controlling the controllable valve assembly 134 in response to a determined need for dissipating energy when the electric traction machine 140 is in a non-operative mode, the vehicle is at stand-still and with the fuel cell(s) operating in an active state for producing electrical energy. Such situation may e.g. occur when the vehicle is controlled into the stand-still operation while the SOC of the battery system is high. Moreover, during stand-still of the vehicle, it may also be a desire to dissipate electrical energy in a situation where the vehicle is equipped with an electric power take-off, ePTO, system and there is a desire to operate the ePTO with a low power output by means of the fuel cell(s), but the power level of the fuel cell(s) exceeds the required power for powering the ePTO and the SOC of the battery system is high. In such situation, it may not be desired to shut-off the fuel cell(s) completely, e.g. if the ePTO is only predicted to be operated for a short period of time until the vehicle is to be reset in a driving mode.

The need for dissipating excessive energy from the vehicle 1 can be determined or estimated in several different manners. In one example, the need for energy dissipation is determined by calculating excessive electrical energy, which can e.g. be derivable by determining the sum between predicted electrical energy consumption and predicted energy production over a given period of time. By way of example, the control system 130 is configured to determine the need for dissipating electrical energy by determining the sum of a power level of the electric traction machine 140, a power level of the fuel cell(s), a power level of the battery system 103. Optionally, the control system 130 also includes any power demand from one or more auxiliaries (such as pumps and fans) and any power losses in the system / vehicle. It should be noted that electric traction machine power can be negative or positive depending on whether the electric traction machine operates in its regenerative mode (generator mode) or traction mode. It may also be noted that the battery system power level can be limited due to a high SOC. The battery system power level can also be limited due to temperature or other.

Typically, the control system 130 is configured to determine the excessive electrical energy by means of any one of an algorithm stored in the memory of the controller, a look-up table stored in the memory, including data of current and/or expected electrical energy consumptions by, or in, the vehicle, as mentioned above. The control system 130 will then compare the determined sum with e.g. a threshold level indicative of an amount of surplus electrical energy. Hence, if the determined sum is above the threshold level, the control system 130 determines that there is a need for dissipating electrical energy by transferring electrical energy to the electrical motor and the air compressor arrangement. Other options are also conceivable depending on type of vehicle and system.

The need for dissipating excessive energy due to the braking demand of the vehicle 1 can be determined or estimated in several different manners. By way of example, the control system 130 is configured to determine the need for dissipating excessive energy due to the braking demand of the vehicle 1 by determining an amount of possible excessive energy due to the braking demand. Typically, although strictly not required, the provision of determining an amount of possible excessive energy from the braking event of the vehicle 1 is determined during a regenerative braking event. In other situations, the excessive energy is predicted by the control system 130 from an up-coming braking event of the vehicle 1 in beforehand based on one or more operational parameters, as mentioned herein.

The amount of possible excessive energy from the braking event of the vehicle 1 is favourably determined based on one or more operational parameters of the vehicle 1. By way of example, the operational parameter contains any one of the following data: data relating to an upcoming vehicle path, such as a downhill and uphill path; data relating to a change in vehicle speed, data relating to a change in acceleration, data relating to state-of-charge, SOC, of the electrical energy storage system, data relating to state of life of the fuel cell(s), characteristics of the electric machine, data relating to the weight of the vehicle 1, data indicating type of vehicle 1.

By way of example, the amount of possible excessive energy is determined by estimating the total electric energy storage level of the vehicle 1. The total energy level of the vehicle 1 here comprises different sets of data comprising one or more of the operational parameters. By way of example, the total energy level includes data indicating state-of-charge SOC of the battery system 103 and state-of-operation of the fuel cell(s) 102 of the vehicle 1. The total energy storage level may also be determined on the basis of the state of life of the battery system 103 and the state of life of the fuel cell(s) 102. In addition, or alternatively, the total energy level may include current energy need for powering auxiliaries of the vehicle, such as air conditioning systems and pneumatic devices. In addition, or alternatively, the total energy level may include predicted future energy need of the vehicle 1 for a given time period. Such data can be gathered by various sensors (not shown) and the control system 130, as is commonly known in the art. To this end, the total energy level of the vehicle 1 may correspond to the prevailing SOC of the energy storage system, while also including predictive energy demands for the vehicle for a given time period.

According to one example operation of the energy management system 10, the control system 130 is configured to control the corresponding flow control valve 136 and flow control valve 135 of the controllable valve assembly 134 to direct compressed air to the air-cooled brake resistor 120 in response to the determined need for dissipating excessive energy, and wherein the control system 130 is further configured to vary the level of the distribution of compressed air to the fuel cell(s) 102 in response to a change in the fuel cell system load. In this context, a change in the fuel cell system load may refer to change from a low load to an intermediate load, from an intermediate load to a high load, from a high load to an intermediate load, from an intermediate load to a low load, from a high load to a low load and/or from a low load to a high load.

By way of example, when the vehicle performs a braking operation and the system 10 is used to dissipate energy in the air-cooled brake resistor 120, the fuel cells 102 of the fuel cell system 100 normally operate at a minimum power lever, also known as at idle conditions; i.e. the fuel cells may generally only demand low flow and pressure from the air compressor arrangement 112. At the same time, i.e. during the given braking operation, a high flow of compressed air and pressure is generally desired for the resistor cooling. Therefore, the control system 130 is here operated to control the controllable valve assembly 134 to distribute compressed air according to the given braking demand and the fuel cell load on the fuel cells 102. However, during normal operation of the vehicle, where there is no energy dissipation in resistor, there is no need for a flow of compressed air from the air compressor arrangement 112 to the brake resistor 120. This is merely one example of how the system 130 may control the valve assembly 134 to distribute compressed air 123 to the brake resistor 120 and the fuel cells 102. A number of additional operations of the energy management system 130 will be described in the following. It should be noted that the fuel cells are generally operated at a minimum power level rather than shut-off as fuel cells operating at minimum power level (i.e. at idle conditions) may degrade less compared to a situation where the fuel cells are shut-off and activated.

Favourably, the control system 130 is configured to prioritize distributing compressed air 123 to the at fuel cell(s) 102 on the basis of the data indicating the fuel cell system load.

By way of example, the corresponding flow control valve 135 of the controllable valve assembly 134 is controlled by the control system 130 to distribute a substantial amount of produced compressed air to the fuel cell(s) 102 when, or if, the fuel cell system load is above a threshold value, e.g. indicating an intermediate load, and subsequently distribute any remaining produced compressed air 123 to the air-cooled brake resistor 120.

The control system 130 is here also configured to determine a maximum operational state of the air compressor arrangement 112 and control the corresponding flow control valve 136 of the controllable valve assembly 134 to reduce, or at least reduce, the distribution of the compressed air 123 to the air-cooled brake resistor 118 when, or if, the air compressor arrangement 112 reaches its maximum operation state.

Favourably, the control system 130 is configured to control distribution of compressed air 123 to the air-cooled brake resistor 120 and the fuel cell(s) 102 by controlling the controllable valve assembly 134 to distribute compressed air 123 to the fuel cell(s) when the control signal indicates a braking demand and a low fuel cell system load. By way of example, the control system 130 is configured to control distribution of compressed air 123 to the air-cooled brake resistor 120 and the fuel cell(s) 102 by setting the controllable shut-off valve 136 in an open state and reducing the opening level of the controllable pressure valve 135 to a reduced first opened state when the control signal indicates a braking demand and a low fuel cell system load. In this situation, the air compressor arrangement 112 is operated for distributing compressed air 123 to the brake resistor 120 on the basis of the determined braking need and further operated for distributing compressed air 123 to the fuel cell(s) 102 on the basis of the determined fuel cell system load.

During a change in the fuel cell system load, the opening degree of the controllable pressure valve 135 is here controlled by the control system 130 to change its state to a reduced opened state. Hence, the control system 130 is also configured to control distribution of compressed air 123 to the air-cooled brake resistor 120 and the fuel cell(s) 102 by controlling the controllable valve assembly 134 to distribute compressed air to the fuel cell(s) 102 when the control signal indicates a braking demand and an intermediate fuel cell system load.

By way of example, the control system 130 is configured to control distribution of compressed air 123 to the air-cooled brake resistor 120 and the fuel cell 102 by setting / maintaining the controllable shut-off valve 136 in the open state and reducing the opening level of the controllable pressure valve 135 to a reduced second opened state when the control signal indicates a braking demand and an intermediate fuel cell system load. The control system 130 is also configured to control the power of the compressor 112. Hence, the control system 130 is configured to increase and decrease the power of the compressor 112. In this situation, the air compressor arrangement 112 is operated for distributing compressed air 123 to the brake resistor 120 on the basis of the determined braking need and operated for distributing compressed air 123 to the fuel cells 102 on the basis of the determined fuel cell system load. It should be noted that the flow to the brake resistor 120 may only need to be reduced if the operational status of the air-compressor arrangement 112 is limited. The optimal case here would still be to provide all the desired compressed air 123 to both the fuel cells 102 and to the brake resistor 120. However, if the air-compressor arrangement 112 hits its operational limit, the control system 130 is generally configured to select to prioritize supplying compressed air 123 to the fuel cells 102, while merely supplying residual compressed air to the brake resistor 120.

In addition, or alternatively, the control system 130 is configured to control distribution of compressed air 123 to the air-cooled brake resistor 120 and the fuel cell 102 by controlling the controllable valve assembly 134 only to distribute compressed air 123 to the fuel cell 102 when the control signal indicates a non-braking demand and a predicted or present fuel cell system load. By way of example, the control system 130 is configured to control distribution of compressed air 123 to the air-cooled brake resistor 120 and the fuel cell 102 by setting the controllable shut-off valve 136 in a closed state and the opening level of the controllable pressure valve 135 to a fully open state when the control signal indicates a non-braking demand and a predicted or present fuel cell system load. In this situation, the air compressor arrangement 112 is operated for distributing compressed air only to the fuel cells 102, and on the basis of the determined fuel cell system load.

In addition, or alternatively, the control system 130 is configured to control distribution of compressed air 123 to the air-cooled brake resistor 120 and the fuel cell 102 by controlling the controllable valve assembly 134 only to distribute compressed air 123 to the brake resistor 120 when the control signal indicates a braking demand and no load on the fuel cell system 100. A no load on the fuel cell system generally corresponds to shut-off state of the fuel cell system. By way of example, the control system 130 is configured to control distribution of compressed air 123 to the air-cooled brake resistor 120 and the fuel cell 102 by setting the controllable shut-off valve 136 in an open state and the opening level of the controllable pressure valve 135 to a closed state when the control signal indicates a braking demand and a no zero fuel cell system load. In this situation, the air compressor arrangement 112 is operated for distributing compressed air 123 only to the brake resistor 120, and on the basis of the determined braking demand.

The control system 130 is favourably also configured to deactivate the air compressor arrangement 112 if the control signal indicate non-braking demand and no fuel cell system load.

It should be noted that in the above description, the various states and loads of the fuel cell system 100, i.e. the high load, intermediate load, low load and no load, are generally determined by using thresholds levels. Such thresholds level can be predetermined thresholds or dynamically defined thresholds. By way of example, such thresholds levels can be derivable from a look-up table stored in a memory of the controller 132. Typically, the load on the fuel cell system corresponds to a continuous power ramping up or down rather than fixed levels. Other options are also conceivable depending on type of vehicle, system and control system.

In addition, while each one of the valves 135 and 136 can be provided by so called fully variable flow control valves, it may be sufficient that the valve 136 is configured to merely open and close the passage to the air-cooled brake resistor 120 according to a conventional shut-off valve, while the other valve 135 should be variably configured such that the flow rate or pressure of the compressed air to the fuel cell 102 can be varied from a closed state to a fully open state, as is readily common for conventional flow control valves.

Optionally, the vehicle 1 comprises another compressor 200, as illustrated in Fig. 2. Such additional compressor 200 may also be arranged in fluid communication with the air-cooling brake resistor 120.

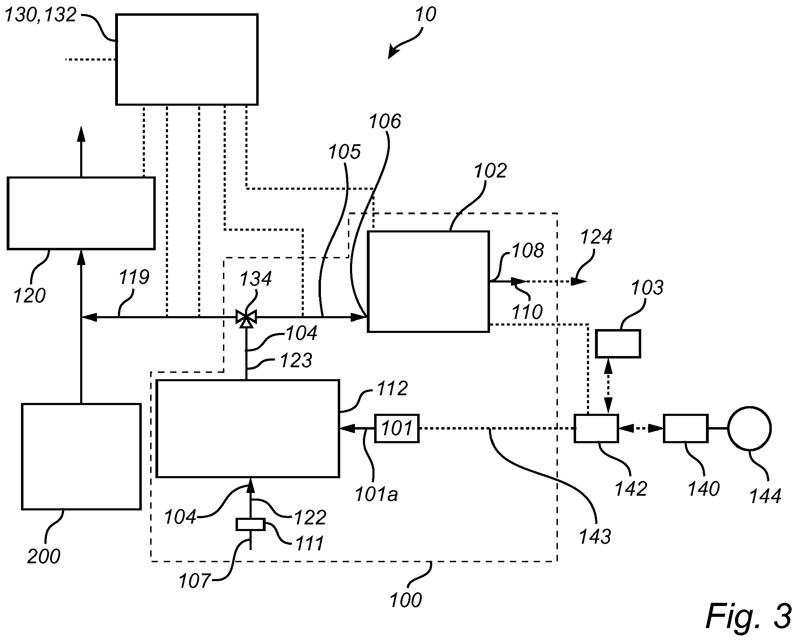

Turning now to Fig. 3, there is provided another example of an energy management system 10. The energy management system 10 generally comprises the components and features as described in relation to Fig. 2. One difference between the system in Fig. 3 and the system in Fig. 2 is that the controllable valve assembly 134 is provided by a single valve device rather than two separate valves as in Fig. 2. In Fig. 3, the controllable valve assembly is a three-way flow control valve device 134. By way of example, the three-way flow control valve device 134 is a so called diverting three-way valve 134. Such diverting three-way valve 134 comprises one inlet port and two individual outlet ports. The diverting three-way valve is configured to receive a fluid medium to the inlet port and distribute the received fluid medium to any one of the outlet ports. In the controllable diverting three-way valve 134 in Fig. 3, one inlet port is fluidly connected to the air compressor arrangement 112, one outlet port is fluidly connected to the fuel cell(s) 102 via the first conduit 104, and another outlet port is fluidly connected to the air-cooled brake resistor 120 via the second conduit 119. Accordingly, the diverting three-way valve is configured to direct compressed air from the compressor to one or both of the first conduit 104 and second conduit 119.

The controllable valve assembly 134 in Fig. 3 is controllable by the control system 130 in a similar vein as described in relation to Fig. 2. Hence, the control system 130 is configured to control distribution of compressed air 123 to any one of the air-cooled brake resistor 120 and the fuel cell(s) 102 by operating the air compressor arrangement 112 and further controlling the controllable valve assembly 134 in response to a control signal containing data indicative of a need for dissipating excessive energy due to a braking demand of the vehicle 1.

The control system 130 is here also configured to control distribution of compressed air 123 to any one of the air-cooled brake resistor 120 and the fuel cell(s) by controlling the controllable valve assembly 134 in response to one or more control signals further containing data indicative of a fuel cell system load. The data indicating the fuel cell system load is generally a measure of the current fuel cell system load. In other situations, the data indicating the fuel cell system load is a measure of a predicted fuel cell system load.

Favourably, the control system 130 is configured to control the controllable valve assembly 134 to distribute compressed air 123 to the air-cooled brake resistor 120 in response to the determined need for dissipating excessive energy and further configured to regulate the distribution of compressed air to the fuel cell(s) 102 in response to a change in the fuel cell system load. Favourably, the control system 130 is configured to prioritize distributing compressed air 123 to the at fuel cell(s) 102 on the basis of the data indicating the fuel cell system load. By way of example, the controllable valve assembly 134 is controlled by the control system 130 to distribute a substantial amount of produced compressed air to the fuel cell(s) 102 when, or if, the fuel cell system load is above a threshold value, e.g. indicating an intermediate load, and subsequently distribute any remaining produced compressed air 123 to the air-cooled brake resistor 120.

The control system 130 is here also configured to determine a maximum operational state of the air compressor arrangement 112 and control the controllable valve assembly 134 to reduce the distribution of the compressed air 123 to the air-cooled brake resistor 118 when, or if, the air compressor arrangement 112 reaches its maximum operation state.

The controllable diverting three-way valve 134 can generally also be controlled as the valves 135 and 136 described in relation to Fig. 2. Hence, in Fig. 3, the control system 130 is configured to control distribution of compressed air 123 to the air-cooled brake resistor 120 and the fuel cell(s) 102 by controlling the controllable diverting three-way valve 134 to distribute compressed air 123 to the fuel cell(s) when the control signal indicates a braking demand and a low fuel cell system load. The control system 130 is also configured to control distribution of compressed air 123 to the air-cooled brake resistor 120 and the fuel cell(s) 102 by controlling the controllable diverting three-way valve 134 to distribute compressed air to the fuel cell(s) 102 when the control signal indicates a braking demand and an intermediate fuel cell system load.

In addition, or alternatively, the control system 130 is configured to control distribution of compressed air 123 to the air-cooled brake resistor 120 and the fuel cell 102 by controlling the controllable diverting three-way valve 134 only to distribute compressed air 123 to the fuel cell 102 when the control signal indicates a non-braking demand and a predicted or present fuel cell system load.

In addition, or alternatively, the control system 130 is configured to control distribution of compressed air 123 to the air-cooled brake resistor 120 and the fuel cell 102 by controlling the controllable diverting three-way valve 134 only to distribute compressed air 123 to the brake resistor 120 when the control signal indicates a braking demand and no load on the fuel cell system 100.

To sum up, and as illustrated in Figs. 2 and 3, there is provided an energy management system 10 for the vehicle 1. The system 10 comprises the fuel cell system 100 having at least one fuel cell 102 with an anode side and a cathode side, the air inlet conduit 104 connected to the inlet end 106 of the cathode side for supplying air to the cathode side of the at least one fuel cell. The fuel cell system 100 also comprises the air compressor arrangement 112 disposed in the air inlet conduit and in fluid communication with the cathode side. The energy management system further comprises the air-cooled brake resistor 120 in fluid communication with the air compressor arrangement. Also, the energy management system 10 comprises the control system 130 having the controller 132 in communication with the air compressor arrangement and with a controllable valve assembly 134. The controllable valve assembly 134 is arranged and configured to control supply of compressed air from the air compressor arrangement 112 to any one of the at least one fuel cell 102 and the air-cooled brake resistor 120 via the first fluid conduit 105 and the second fluid conduit 119, respectively. In addition, the control system 130 is configured to control distribution of compressed air to any one of the air-cooled brake resistor 120 and the at least one fuel cell 102 by operating the air compressor arrangement 112 and controlling the controllable valve assembly 134 in response to the control signal containing data indicative of a need for dissipating excessive energy due to a braking demand of the vehicle 1.

It should be noted that the inlet conduit 104 may include a number of sub-conduits and additional components. In the example embodiments depicted in Figs. 2 and 3, a part of the inlet conduit 104 extending between the air compressor arrangement 112 and the inlet end 106 of the cathode side comprises the first fluid conduit 105. In e.g. Fig. 2, the first fluid conduit 105 connects the controllable pressure valve 135 to the fuel cell(s) 102. In addition, another part of the inlet conduit 104 connects the air compressor arrangement 112 to the controllable pressure valve 135. In a similar vein, the second fluid conduit 119 connect the shut-off valve 136 to the air-cooled brake resistor 120. In addition, another part of the inlet conduit 104 connects the air compressor arrangement 112 to the shut-off valve 136.

Although not depicted in Figs. 2 and/or 3, it should also be readily appreciated that the fuel cell system 100 may comprise one or more temperature sensors and pressure sensors to provide further control data for the controller 132 and the system 130. The application of such sensors in a fuel cell system 100 is generally provided and arranged in view of the type of fuel cell system and vehicle, as is commonly known in the art. The fuel cell system may also contain temperature sensors in the fuel cell, or in a housing of the fuel cell. Hereby, the temperature level of the fuel cell can be determined.

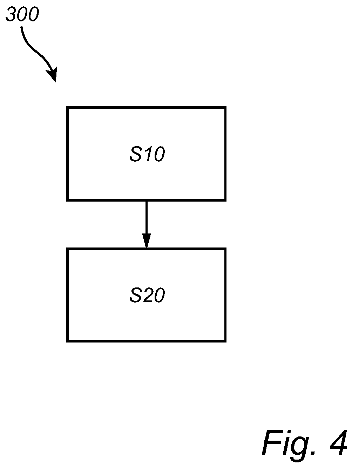

The controller 134 of the control system 130 is configured to implement a method 300 according to the following operations, which is also illustrated in Fig. 4. The method may generally be implemented by a processing circuitry of the controller 134. Hence, turning now to an example of an energy management strategy for the vehicle 1, including a number of operations of a method for the system 130 so as to dissipate excessive energy generated e.g. from a regenerative braking event of the vehicle 1.

The method 300 is intended for controlling the energy management system 130 of the vehicle 1. The method 300 comprises a step of receiving S10 a control signal containing data indicative of a need for dissipating energy. In addition, the method comprises a step of controlling S20 distribution of compressed air to any one of the air-cooled brake resistor 120 and the at least one fuel cell 102 in response to the received control signal. The distribution of compressed air to any one of the air-cooled brake resistor 120 and the at least one fuel cell 102 in response to the received control signal is controlled by controlling the air compressor arrangement 112 and the controllable valve assembly 134, as described in relation any one of the herein examples and operations.

The control signal contains data indicative of a need for dissipating energy due to at least a braking demand of the vehicle. In addition, the method comprises a step of controlling S20 distribution of compressed air to any one of the air-cooled brake resistor 120 and the at least one fuel cell 102 in response to the received control signal.

By way of example, the method performs by means of the controller 132 of the control system 130 a step of controlling the controllable valve assembly 134 in response to receiving data indicative of a wanted brake power for braking the vehicle, e.g. during a down-hill route. Other data may also be used as control input to the methods and control systems, as described herein.

In addition, the controllable valve assembly 134, including the valves 135 and 136, may be controlled by the method and controller 132 for directing the compressed air flow from the air compressor arrangement 112 to the fuel cells 102 and from the air compressor arrangement 112 to the brake resistor 120.

The controller 132 may also be in communication with the fuel cell system 100, fuel cell(s) 102, air compressor arrangement 112, the air-cooled brake resistor 120 and any other components, such as another compressor 200 of the vehicle 1. By way of example, the controller 132 is configured to control one or more valve positions of the controllable valve assembly 134, a valve position of the valve 135, a valve position of the valve 136, the FC load on the fuel cell(s) 102, speed of the air compressor arrangement 112, brake power, current and temperature of the air-cooled brake resistor 120, and optionally an operation of any other compressor 200.

The controller 132 may likewise be configured to control these components in response to any one of an operating mode of the vehicle and a power demand from the vehicle.

The controller 132 may also be operable to control any one of the above-mentioned valve assembly, valve device and valves in response to a received control signal indicating the activation state of the fuel cell system. Each one of the above-mentioned valve assembly, valve device and valves may be controllable in a coordinated manner by the controller 132 in response to the operating mode of the vehicle. Hence, while the controller 132 is arranged in communication with the controllable valve assembly 134 so as to control the controllable valve assembly 134 based on the control signal, the controller 132 may also be connected to another vehicle control system for receiving signals indicative of e.g. a current operating mode for the vehicle.

The controller 132 generally comprises the processing circuitry. In other words, the processing circuitry of the controller 132 is configured to receive a control signal from the vehicle. The control signal is indicative of a request for dissipating energy from the energy management system 10 due to a braking demand for the vehicle. By way of example, in operation of the vehicle 1, the processing circuitry of the controller 132 determines a level of electric energy dissipation for the vehicle and the energy management system 10, i.e. a level of electric energy that should be dissipated from the brake resistor since the electric machine operated in its generator mode during braking may not be suitable to supply such power to the battery any longer. The level of electric energy dissipation may hence be a difference between the level of electric energy generated during the regenerative braking and the current electric charging capacity of the battery. If the electric motor 101 is able to handle, i.e. receive and be operated by, electric energy corresponding to the level of the electric power dissipation, all excess electric power, i.e. the generated power not being supplied to the battery for charging, may be supplied to the electric motor 101.

The controller 132 may for example be an electronic control unit (ECU) comprised with the vehicle. The controller 132 generally comprises a processing circuitry, a control circuitry or the like. However, the controller 132 may likewise be provided by a number of sub-control units (not illustrated), wherein each one of the control units may generally comprise a corresponding control circuitry, processor or the like. The controller 132 may include one or more hardware components for conducting data or signal processing or for executing computer code stored in memory. The memory may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to an example, any distributed or local memory device may be utilized with the systems and methods of this description. According to an exemplary embodiment the memory is communicably connected to the processing circuitry, control circuitry or processor (e.g., via a circuit or any other wired, wireless, or network connection) and includes computer code for executing one or more processes described herein. The controller 132 may communicate with the components of the system 30, including e.g. the valves 134, 135, 136 and the compressor 112, either by wire or by a wireless network, as is commonly known in the art.

The controllable valve assembly 134 and each one of the valves 135, 136 are favourably actuated by a corresponding solenoid corresponding to a valve actuator, as is commonly known in the art of control valves for fluids. However, many types of actuations are available, such as electric, pneumatic and hydraulic actuation of the controllable valve assembly 134 and the valves 135, 136 in response to the control signal from the controller 132.

Thanks to the system 10 as described above, it becomes possible to provide an improved energy management of excessive energy generated from a braking operation of the vehicle. In particular, by providing an energy management system having an air compressor arrangement disposed in the air inlet conduit of the fuel cell system and in fluid communication with the fuel cell(s) and the brake resistor, it becomes possible to improve the capabilities of the vehicle to absorb some amount of energy and power during a braking demand, such as during a braking event or in the preparations of an upcoming braking demand. Such excessive energy may thus be used to pressurize the air by means of operating the air-compressor arrangement, whilst the control system is capable of controlling the distribution of the compressed air to the fuel cell(s) and the brake resistor, thereby increasing the general efficiency of the energy management system of the vehicle.

The proposed energy management system may also allow for recuperating energy more effectively without oversizing the battery/energy storage system of the vehicle. Hence, according to at least one embodiment, the air-compressor arrangement is arranged to operate from recuperation of brake energy from a braking event. As such, the air-compressor arrangement is arranged to absorb energy generated from the braking event.

## Claims

1. An energy management system (10) for a vehicle (1) comprising an electric traction machine (140), wherein the energy management system comprises:
a fuel cell system (100) having at least one fuel cell (102) with an anode side and a cathode side, an air inlet conduit (104) connected to an inlet end (106) of the cathode side for supplying air to the cathode side of the at least one fuel cell, and further having an air compressor arrangement (112) disposed in the air inlet conduit and in fluid communication with the cathode side; **characterized in that** the energy management system further comprises
an air-cooled brake resistor (120) in fluid communication with the air compressor arrangement; and
a control system (130) in communication with the air compressor arrangement and further in communication with a controllable valve assembly (134), said controllable valve assembly being arranged and configured to control supply of compressed air from said air compressor arrangement to any one of the at least one fuel cell and the air-cooled brake resistor via a first fluid conduit (105) and a second fluid conduit (119), respectively,
wherein said control system is configured to control distribution of compressed air to any one of the air-cooled brake resistor and the at least one fuel cell by operating the air compressor arrangement and controlling the controllable valve assembly responsive to a need for dissipating energy, wherein said control system is configured to control distribution of compressed air to any one of the air-cooled brake resistor and the at least one fuel cell by controlling the controllable valve assembly in response to a control signal containing data indicative of a need for dissipating energy due to a braking demand of the vehicle.

2. Energy management system according to claim 1, wherein said control system is configured to determine the need for dissipating energy due to the braking demand of the vehicle by determining an amount of possible energy from a regenerative braking event of the vehicle.

3. Energy management system according to any one of the preceding claims, wherein said control system is configured to control distribution of compressed air to any one of the air-cooled brake resistor and the at least one fuel cell by controlling the controllable valve assembly in response to a control signal further containing data indicative of a fuel cell system load.

4. Energy management system according to claim 3, wherein the control system is configured to control the controllable valve assembly to direct compressed air to the air-cooled brake resistor in response to the need for dissipating energy and to control the controllable valve assembly to vary the level of distribution of compressed air to the at least one fuel cell in response to a change in the fuel cell system load.

5. Energy management system according to claim 3 or claim 4, wherein said control system is configured to prioritize distributing compressed air to the at least one fuel cell on the basis of said data indicating the fuel cell system load, wherein the controllable valve assembly is controlled to distribute a substantial amount of produced compressed air to the at least one fuel cell if the fuel cell system load is above a threshold value and distribute any remaining produced compressed air to the air-cooled brake resistor.

6. Energy management system according to any one of the preceding claims, wherein said control system is configured to determine a maximum operational state of the air compressor arrangement and control the controllable valve assembly to limit the distribution of compressed air to the air-cooled brake resistor if the air compressor arrangement reaches its maximum operational state.

7. Energy management system according to any one of the preceding claims, wherein the control system is configured to deactivate the air compressor arrangement in response to a non-braking demand and no fuel cell system load.

8. Energy management system according to any one of the preceding claims, wherein said control system is configured to control distribution of compressed air to any one of the air-cooled brake resistor and the at least one fuel cell by operating the air compressor arrangement and controlling the controllable valve assembly responsive to the need for dissipating energy and when the vehicle is at stand-still.

9. Energy management system according to any one of the preceding claims, wherein the controllable valve assembly comprises a set of individual flow control valves (135, 136), each one of the individual flow control valves being configured to regulate any one of a flow rate and pressure of the compressed air being supplied from the air compressor arrangement, wherein one of the individual flow control valves (135) is disposed in the first fluid conduit and arranged to regulate the flow rate or pressure of the compressed air to the at least one fuel cell, and wherein one of the individual flow control valves (136) is disposed in the second fluid conduit and arranged to regulate the flow rate or pressure of compressed air to the air-cooled brake resistor.

10. Energy management system according to any one of the claims 1 to 8, wherein the controllable valve assembly is a three-way flow control valve device.

11. A vehicle comprising an electric traction machine (140) and an energy management system (10) according to any one of claims 1 - 10.

12. Vehicle according to claim 11, wherein the electric traction machine is configured to propel the vehicle and to controllably regenerate electric power during regenerative braking of the vehicle.

13. A method for controlling the energy management system of a vehicle according to any one of the claims 1 to 10, said method comprising:
- receiving a control signal containing data indicative of need for dissipating energy due to a braking demand of the vehicle; and
- in response to said received control signal, controlling distribution of compressed air to any one of the air-cooled brake resistor and the at least one fuel cell by controlling the air compressor arrangement and the controllable valve assembly.

## Patentansprüche

1. Energiemanagementsystem (10) für ein Fahrzeug (1), umfassend eine elektrische Zugmaschine (140), wobei das Energiemanagementsystem umfasst:
ein Brennstoffzellensystem (100) mit mindestens einer Brennstoffzelle (102) mit einer Anodenseite und einer Kathodenseite, einer Lufteinlassleitung (104), die mit einem Einlassende (106) der Kathodenseite verbunden ist, um der Kathodenseite der mindestens einen Brennstoffzelle Luft zuzuführen, und ferner mit einer Luftkompressoranordnung (112), die in der Lufteinlassleitung angeordnet ist und in Fluidverbindung mit der Kathodenseite steht; **dadurch gekennzeichnet, dass** das Energiemanagementsystem ferner umfasst
einen luftgekühlten Bremswiderstand (120) in Fluidverbindung mit der Luftkompressoranordnung; und
ein Steuerungssystem (130), das mit der Luftkompressoranordnung in Verbindung steht und ferner mit einer steuerbaren Ventilanordnung (134) in Verbindung steht, wobei die steuerbare Ventilanordnung angeordnet und konfiguriert ist, um die Zufuhr von Druckluft von der Luftkompressoranordnung zu einer der mindestens einen Brennstoffzelle oder dem luftgekühlten Bremswiderstand über eine erste Fluidleitung (105) bzw. eine zweite Fluidleitung (119) zu steuern,
wobei das Steuerungssystem konfiguriert ist, um die Verteilung von Druckluft an einen beliebigen luftgekühlten Bremswiderstand oder an die mindestens eine Brennstoffzelle zu steuern, indem es die Luftkompressoranordnung betreibt und die steuerbare Ventilanordnung in Reaktion auf einen Bedarf an Energieabfuhr steuert, wobei das Steuerungssystem konfiguriert ist, um die Verteilung von Druckluft an einen beliebigen luftgekühlten Bremswiderstand oder an die mindestens eine Brennstoffzelle steuert, indem es die steuerbare Ventilanordnung in Reaktion auf ein Steuersignal steuert, das Daten enthält, die einen Bedarf an Energieabfuhr aufgrund einer Bremsanforderung des Fahrzeugs anzeigen.

2. Energiemanagementsystem nach Anspruch 1, wobei das Steuerungssystem konfiguriert ist, dass es den Bedarf an Energieabfuhr aufgrund der Bremsanforderung des Fahrzeugs bestimmt, indem es eine mögliche Energiemenge aus einem regenerativen Bremsvorgang des Fahrzeugs bestimmt.

3. Energiemanagementsystem nach einem der vorhergehenden Ansprüche, wobei das Steuerungssystem konfiguriert ist, um die Verteilung von Druckluft an einen beliebigen luftgekühlten Bremswiderstand oder an die mindestens eine Brennstoffzelle zu steuern, indem es die steuerbare Ventilanordnung in Reaktion auf ein Steuersignal steuert, das ferner Daten enthält, die die Belastung des Brennstoffzellensystems anzeigen.

4. Energiemanagementsystem nach Anspruch 3, wobei das Steuerungssystem konfiguriert ist, um die steuerbare Ventilanordnung zu steuern, um Druckluft zu dem luftgekühlten Bremswiderstand zu leiten in Reaktion auf einen Bedarf an Energieabfuhr, und die steuerbare Ventilanordnung zu steuern, um den Grad der Verteilung der Druckluft zu der mindestens einen Brennstoffzelle in Reaktion auf eine Änderung der Belastung des Brennstoffzellensystems zu ändern.

5. Energiemanagementsystem nach Anspruch 3 oder Anspruch 4, wobei das Steuerungssystem konfiguriert ist, um die Verteilung von Druckluft an die mindestens eine Brennstoffzelle auf der Grundlage der Daten, die die Belastung des Brennstoffzellensystems anzeigen, zu priorisieren, wobei die steuerbare Ventilanordnung gesteuert wird, um eine wesentliche Menge der erzeugten Druckluft an die mindestens eine Brennstoffzelle zu verteilen, wenn die Belastung des Brennstoffzellensystems über einem Schwellenwert liegt, und jegliche verbleibende erzeugte Druckluft an den luftgekühlten Bremswiderstand zu verteilen.

6. Energiemanagementsystem nach einem der vorhergehenden Ansprüche, wobei das Steuerungssystem konfiguriert ist, um einen maximalen Betriebszustand der Luftkompressoranordnung zu bestimmen und die steuerbare Ventilanordnung zu steuern, um die Verteilung von Druckluft an den luftgekühlten Bremswiderstand zu begrenzen, wenn die Luftkompressoranordnung ihren maximalen Betriebszustand erreicht.

7. Energiemanagementsystem nach einem der vorhergehenden Ansprüche, wobei das Steuerungssystem konfiguriert ist, um die Luftkompressoranordnung in Reaktion auf eine Nicht-Bremsanforderung und keine Belastung des Brennstoffzellensystems zu deaktivieren.

8. Energiemanagementsystem nach einem der vorhergehenden Ansprüche, wobei das Steuerungssystem konfiguriert ist, um die Verteilung von Druckluft an einen beliebigen luftgekühlten Bremswiderstand oder an die mindestens eine Brennstoffzelle zu steuern, indem es die Luftkompressoranordnung betreibt und die steuerbare Ventilanordnung in Reaktion auf einen Bedarf an Energieabfuhr steuert, und wenn das Fahrzeug im Stillstand steht.

9. Energiemanagementsystem nach einem der vorhergehenden Ansprüche, wobei die steuerbare Ventilanordnung einen Satz einzelner Durchflussregelventile (135, 136) umfasst, wobei jedes der einzelnen Durchflussregelventile konfiguriert ist, um entweder eine Durchflussrate oder einen Druck der Druckluft, die von der Luftkompressoranordnung zugeführt wird, zu regulieren, wobei eines der einzelnen Durchflussregelventile (135) in der ersten Fluidleitung angeordnet ist und so eingerichtet ist, dass es die Durchflussrate oder den Druck der Druckluft zu der mindestens einen Brennstoffzelle reguliert, und wobei eines der einzelnen Durchflussregelventile (136) in der zweiten Fluidleitung angeordnet ist und so eingerichtet ist, dass es die Durchflussrate oder den Druck der Druckluft zu dem luftgekühlten Bremswiderstand reguliert.

10. Energiemanagementsystem nach einem der Ansprüche 1 bis 8, wobei die steuerbare Ventilanordnung eine Drei-Wege-Durchflussregelventilvorrichtung ist.

11. Fahrzeug mit einer elektrischen Zugmaschine (140) und einem Energiemanagementsystem (10) nach einem der Ansprüche 1-10.

12. Fahrzeug nach Anspruch 11, wobei die elektrische Zugmaschine konfiguriert ist, um das Fahrzeug anzutreiben und während des regenerativen Abbremsens des Fahrzeugs steuerbar elektrische Energie zurückzugewinnen.

13. Verfahren zur Steuerung des Energiemanagementsystems eines Fahrzeugs nach einem der Ansprüche 1 bis 10, wobei das Verfahren umfasst:
- Empfangen eines Steuersignals, das Daten enthält, die den Bedarf an Energieabfuhr aufgrund einer Bremsanforderung des Fahrzeugs anzeigen; und
- in Reaktion auf das empfangene Steuersignal die Verteilung von Druckluft an einen beliebigen luftgekühlten Bremswiderstand oder die mindestens eine Brennstoffzelle durch Steuern der Luftkompressoranordnung und der steuerbaren Ventilanordnung zu steuern.

## Revendications

1. Système de gestion d'énergie (10) pour véhicule (1) comprenant une machine de traction électrique (140), dans lequel le système de gestion d'énergie comprend :
un système de pile à combustible (100) comprenant au moins une pile à combustible (102) avec un côté anode et un côté cathode, un conduit d'entrée d'air (104) relié à une extrémité d'entrée (106) du côté cathode pour fournir de l'air au côté cathode de la pile à combustible, et comportant en outre un agencement de compresseur d'air (112) disposé dans le conduit d'entrée d'air et en communication fluidique avec le côté cathode ; **caractérisé en ce que** le système de gestion d'énergie comprend en outre
une résistance de freinage refroidie par air (120) en communication fluidique avec l'agencement de compresseur d'air ; et
un système de commande (130) en communication avec l'agencement de compresseur d'air et en outre en communication avec un ensemble soupape réglable (134), ledit ensemble soupape réglable étant agencé et configuré pour commander l'alimentation en air comprimé dudit ensemble compresseur d'air vers l'une quelconque de la pile à combustible ou de la résistance de freinage refroidie par air par l'intermédiaire d'un premier conduit de fluide (105) et d'un second conduit de fluide (119) respectivement,
ledit système de commande étant configuré pour commander la distribution d'air comprimé à l'une quelconque de la résistance de freinage refroidie par air et de l'au moins une pile à combustible en actionnant le dispositif de compresseur d'air et en commandant l'ensemble soupape réglable en réponse à un besoin de dissipation d'énergie, ledit système de commande étant configuré pour commander la distribution d'air comprimé à l'une quelconque de la résistance de freinage refroidie par air et de l'au moins une pile à combustible en commandant l'ensemble soupape commandable en réponse à un signal de commande contenant des données indiquant un besoin de dissipation d'énergie dû à une demande de freinage du véhicule.

2. Système de gestion d'énergie selon la revendication 1, dans lequel ledit système de commande est configuré pour déterminer le besoin de dissipation d'énergie dû à la demande de freinage du véhicule en déterminant une quantité d'énergie possible à partir d'un événement de freinage par récupération du véhicule.

3. Système de gestion d'énergie selon l'une quelconque des revendications précédentes, dans lequel ledit système de commande est configuré pour commander la distribution d'air comprimé vers l'une quelconque de la résistance de freinage refroidie par air et/ou l'au moins une pile à combustible en commandant l'ensemble soupape commandable en réponse à un signal de commande contenant en outre des données indiquant une charge du système de pile à combustible.

4. Système de gestion d'énergie selon la revendication 3, dans lequel le système de commande est configuré pour commander l'ensemble soupape commandable afin de diriger l'air comprimé vers la résistance de freinage refroidie par air en réponse au besoin de dissipation d'énergie et de commander l'ensemble soupape commandable pour varier le niveau de distribution de l'air comprimé vers l'au moins une pile à combustible en réponse à un changement de charge du système de pile à combustible.

5. Système de gestion d'énergie selon la revendication 3 ou la revendication 4, dans lequel ledit système de commande est configuré pour donner la priorité à la distribution d'air comprimé à ladite au moins une pile à combustible sur la base desdites données indiquant la charge du système de pile à combustible, l'ensemble soupape réglable étant commandé pour distribuer une quantité substantielle d'air comprimé produit dans la pile à combustible si la charge du système de pile à combustible est supérieure à une valeur seuil et pour distribuer tout air comprimé produit restant dans la résistance de freinage refroidie par air.

6. Système de gestion d'énergie selon l'une quelconque des revendications précédentes, dans lequel ledit système de commande est configuré pour déterminer un état de fonctionnement maximal de l'agencement de compresseur d'air et commander l'ensemble soupape commandable pour limiter la distribution d'air comprimé à la résistance de freinage refroidie par air si l'agencement de compresseur d'air atteint son état de fonctionnement maximal.

7. Système de gestion d'énergie selon l'une quelconque des revendications précédentes, dans lequel le système de commande est configuré pour désactiver l'agencement de compresseur d'air en réponse à une demande de non-freinage et à l'absence de charge du système de pile à combustible.

8. Système de gestion d'énergie selon l'une quelconque des revendications précédentes, dans lequel ledit système de commande est configuré pour commander la distribution d'air comprimé à l'une quelconque de la résistance de freinage refroidie par air et de la pile à combustible en actionnant l'agencement de compresseur d'air et en commandant de l'ensemble soupape réglable en réponse à la nécessité de dissiper l'énergie et lorsque le véhicule est à l'arrêt.

9. Système de gestion de l'énergie selon l'une quelconque des revendications précédentes, dans lequel l'ensemble soupape commandable comprend un ensemble de soupapes de régulation de débit individuelles (135, 136), chacune des soupapes de régulation de débit individuelles étant configurée pour réguler l'un quelconque d'un débit et d'une pression de l'air comprimé fourni par l'ensemble compresseur d'air, l'une des soupapes de régulation de débit individuelles (135) étant disposée dans le premier conduit de fluide et étant conçue pour réguler le débit ou la pression de l'air comprimé vers la pile à combustible, et l'une des soupapes de régulation de débit individuelles (136) étant disposée dans le second conduit de fluide et conçue pour réguler le débit ou la pression de l'air comprimé vers la résistance de freinage refroidie par air.

10. Système de gestion de l'énergie selon l'une quelconque des revendications 1 à 8, dans lequel l'ensemble soupape commandable est un dispositif de soupape de régulation de débit à trois voies.

11. Véhicule comprenant une machine de traction électrique (140) et un système de gestion d'énergie (10) selon l'une quelconque des revendications 1 à 10.

12. Véhicule selon la revendication 11, dans lequel la machine de traction électrique est configurée pour propulser le véhicule et pour régénérer de manière contrôlée l'énergie électrique pendant le freinage par récupération du véhicule.

13. Procédé pour commander le système de gestion d'énergie d'un véhicule selon l'une quelconque des revendications 1 à 10, ledit procédé comprenant les étapes consistant à :
- recevoir un signal de commande contenant des données indiquant la nécessité de dissiper l'énergie due à une demande de freinage du véhicule ; et
- en réponse audit signal de commande reçu, commander la distribution d'air comprimé à l'une quelconque de la résistance de freinage refroidie par air et de l'au moins une pile à combustible en commandant l'agencement de compresseur d'air et l'ensemble soupape commandable.
